# EUROPEAN PATENT SPECIFICATION

(11) **EP 4 553 682 B1**
(45) Date of publication and mention of the grant of the patent: **08.07.2026**
(21) Application number: 24211318.1
(22) Date of filing: 07.11.2024
(51) Int. Cl.: G06F 21/10, G06F 21/60, H04L 9/40, H04W 12/10, G06F 9/00, G06F 12/00, G06F 13/00, G06F 3/06

(54) **METHOD FOR STORING CRITICAL DATA**
VERFAHREN ZUR SPEICHERUNG KRITISCHER DATEN
PROCÉDÉ DE STOCKAGE DE DONNÉES CRITIQUES

(30) Priority: 08.11.2023 FR 2312138
(43) Date of publication of application: 14.05.2025
(73) Proprietor: STMicroelectronics International N.V., 1228 Plan-les-Ouates, Geneva (CH)
(72) Inventor: TRIMMER, Mark, 38500 COUBLEVIE (FR)
(74) Representative: Cabinet Beaumont

(56) References cited:
- US-A1- 2014 006 797
- US-A1- 2015 371 055
- US-A1- 2018 129 826

## Description

### Technical field

The present disclosure relates generally to electronical circuits and devices, and more particularly the security of critical data used in such circuits and devices. The present disclosure concerns more precisely a method for storing critical data in an external memory.

### Background art

Storing critical data in an electronical device is a task that is part of the general security management of said electronical device.

It would be desirable to at least partly improve certain aspects of known method for storing critical data in an external memory.

Document US 2014/006797 concerns a memory authentication using redundant encryption.

Document US 2015/371055 concerns a host controller and a system-on-chip.

### Summary of Invention

The invention is defined by the appended claims. There is a need for a method for storing critical data that is more secure.

There is a need for a method for storing critical data in an external memory that is more secure.

There is a need for a method for storing critical data that does not add complexity to the method.

There is a need for a method for storing critical data that can detect a modification of the critical data immediately.

There is a need for an electronical device capable of executing the previously described method for storing critical data.

One embodiment addresses all or some of the drawbacks of known method for storing critical data.

One embodiment provides a method for storing blocks of critical data of an electronical device in a memory that is external to said electronical device, comprising the following steps:
- Obtaining first encrypted blocks of data by encrypting blocks of critical data using a first encryption key;
- Obtaining second encrypted blocks of data by encrypting blocks of critical data using a second encryption key different from the first encryption key; and
- Storing first and second encrypted blocks of data in said memory.

Another embodiment provides an electronical device adapted to store blocks of critical data in a memory that is external to said electronical device by executing the following steps:
- Obtaining first encrypted blocks of data by encrypting blocks of critical data using a first encryption key;
- Obtaining second encrypted blocks of data by encrypting blocks of critical data using a second encryption key different from the first encryption key; and
- Storing first and second encrypted blocks of data in said memory.

According to an embodiment, said first and second encrypted blocks of data are mixed into said memory.

According to an embodiment, in said memory, each data composing said each first encrypted block of data is stored immediately before the corresponding second encrypted block of data.

According to an embodiment, the first and second encrypted blocks of data are obtained by applying AES to said critical data.

According to an embodiment, said first encrypted blocks of data are obtained by using the following steps:
(a) Combining blocks of critical data with a first word of data; and
(b) Encrypting the result of step (a) with said first encryption key.

According to an embodiment, said second encrypted blocks of data are obtained by using the following steps:
(c) Combining blocks of critical data with said first encrypted blocks of data; and
(d) Encrypting the result of step (c) with said second encryption key.

According to an embodiment, said memory is a DRAM memory.

According to an embodiment, said electronical device comprises a processor capable of processing critical blocks of data.

Another embodiment provides a method for retrieving critical blocks of data stored in a memory by using the previously described method.

Another embodiment provides a device being able to retrieve critical blocks of data stored in a memory by using the previously described method.

According to an embodiment, said method comprises the following steps:
- Get first and second encrypted blocks of data from said memory;
- Decrypt first encrypted blocks of data using said first encryption key;
- Decrypt second encrypted blocks of data using said second encryption key; and
- Compare the results of both decryption steps, if they are identical the blocks of critical data can be used.

According to an embodiment, if the result of both decryption steps are not identical, the blocks of critical data cannot be used.

According to an embodiment, the step of getting first and second encrypted blocks of data from said memory comprises a step of separating first and second encrypted data.

### Brief description of drawings

The foregoing features and advantages, as well as others, will be described in detail in the following description of specific embodiments given by way of illustration and not limitation with reference to the accompanying drawings, in which:
Figure 1 illustrates, very schematically and in block forms, an example of electronic device capable of executing the embodiment described in relation with Figures 2 to 4;
Figure 2 illustrates, schematically and in block forms, a first embodiment of a method for storing critical data;
Figure 3 illustrates, in block forms, a step of the embodiment of Figure 2;
Figure 4 illustrates, schematically and in block forms, an example of the execution of the first embodiment of Figure 2; and
Figure 5 illustrates, schematically and in block forms, a second embodiment of a method for storing critical data.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

The embodiments described hereafter concern the storing of critical data in memory, and the corresponding retrieving method. In the following, critical data are data of which the access to is restricted to one or a plurality of specific persons and/or devices. In most cases, when a processor or a circuit is processing sensible data, such data are stored in a memory that is trusted by said processor or circuit. It is more convenient for security purposes.

A trusted memory is often a memory that is mounted on a same die as the processor or circuit, and with whom a secure communication is possible. Due to space restrictions in electronic device, it is common that a trusted memory does not have enough storing capacity to process all the necessary critical data. For that purpose, it is more convenient to use an untrusted memory to store critical data. An untrusted memory, called hereafter an external memory, is a memory with whom a secure communication is not possible. For that matter, an untrusted memory is often not mounted on the same die as the processor or circuit.

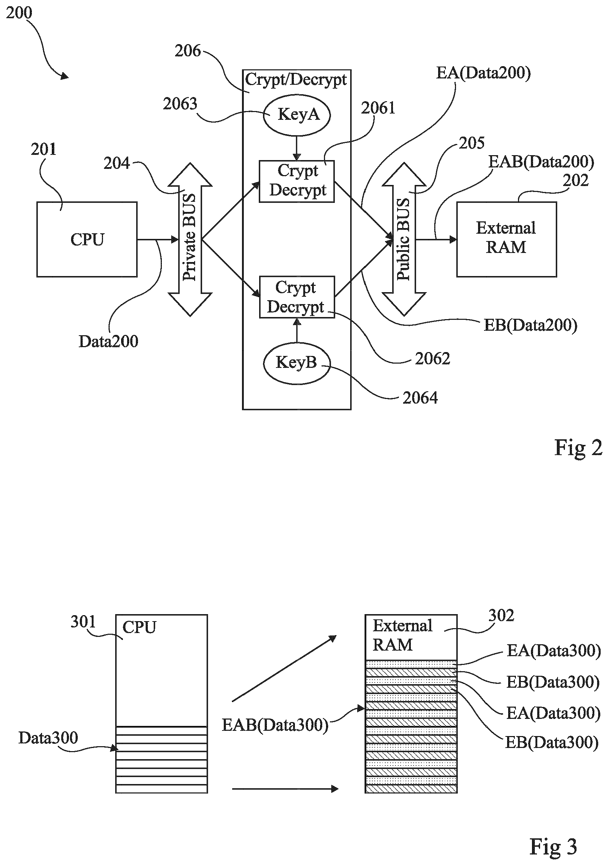

If critical data are stored in an untrusted memory, a way of securing the critical data needs nevertheless to be executed. The embodiments described hereafter concerns a secure method for storing of critical data in an untrusted memory, and the corresponding retrieving method. For that matter, the method comprises a double encryption steps with different encryption keys and a step of mixing encrypted data. This will prevent data to be accessible to and/or modified by an unauthorized person or circuit. Such methods are described in more details in relation with Figures 2 to 4.

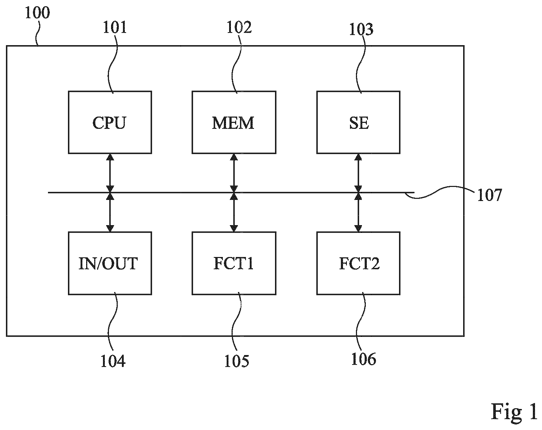

Figure 1 shows, very schematically and in block form, an electronic device 100 capable of implementing the method for storing critical data described in relation with Figures 2 to 4.

Device 100 is an electronic device adapted to processing data, and more particularly, to processing critical data.

Device 100 comprises a processor 101 (CPU) enabled to process data. According to an example, device 100 may comprise a plurality of processors, each adapted to processing different types of data. According to a specific example, device 100 may comprise at least one processor that is adapted to process critical data.

Device 100 further comprises one or a plurality of memories 102 (MEM) into which are stored data, for example, critical data. According to an example, device 100 comprises a plurality of types of memories, such as a ROM, a RAM a volatile memory, and/or a non-volatile memory. According to a specific example, device 100 may comprise one or more memories that are trusted by the processor 101 and that have a secure access to the processor 101. According to an embodiment, device 100 comprises one or more external memories, or untrusted memories, that do not have a secure access to the processor 101. The method for storing critical data described in relation with Figures 2 to 4 concerns the storing of critical data by the processor 101 in an external memory.

Device 100 further comprises one or more secure element 103 (SE) adapted to processing critical and/or secret data. Secure element 103 may comprise its own processor(s), its own memory or memories, etc. According to an example, the method for storing critical data described in relation with Figures 2 to 4 may concern the storing of critical data by the secure element 103 in an external memory.

Device 100 further and optionally comprises one or a plurality of input/output circuits 104 (I/O) enabling device 100 to transmit and/or to receive data and/or energy with one or a plurality of external electronic devices.

Device 100 further comprises one or a plurality of circuits 105 (FCT1) and 106 (FCT2) implementing one or a plurality of functionalities of device 100. According to an example, circuits 105 and 106 may comprise specific data processing circuits, such as ciphering circuits, or circuits enabling to perform measurements, such as sensors.

Device 100 further comprises one or a plurality of communication buses 107 enabling all the circuits of device 100 to communicate. In Figure 1, a single bus 107 coupling processor 101, memory or memories 102, secure element 103, and circuits 104 to 106 is shown but in practice, device 100 comprises a plurality of communication buses coupling these different elements.

Figure 2 represents, in block form, the execution, by a device 200, of an embodiment of a method for storing critical data in a memory.

According to an embodiment, device 200 comprises a processor 201 (CPU) of the type of processor 101 described in relation with Figure 1, and a memory 202 (External RAM) that is considered untrusted by the processor 201. Memory 202 is, hereafter, called an external memory. Processor 201 is capable of processing critical data, and needs to store critical data into memory 202.

Processor 201 has access to a private bus 204 (PRIVATE BUS) ensuring secure communication with other circuit or component of device 200.

Memory 202 has only access to a public bus 205 (Public BUS) to communicate with other components of device 200, and especially with processor 201. According to an example, the memory 202 is a Random Access Memory, also called RAM, and more particularly, a Dynamical Random Access memory, also called DRAM.

Device 201 further comprises an encryption and decryption unit 206 (Crypt/Decrypt) adapted to connect both buses 204 and 205. More particularly, unit 206 is capable of exchanging critical data with the private bus 204, and of exchanging encrypted data with the public bus 205.

According to an embodiment, unit 206 comprises two identical encryption and decryption engines 2061 and 2062 capable of:
- encrypting critical data received from the private bus 204; and
- decrypting encrypted data received from the public bus 204.

The only difference between engines 2061 and 2062 is that they are working with different encryption and decryption keys 2063 (KeyA) and 2064 (KeyB). In Figure 2, engine 2061 is using the encryption and decryption key 2063, engine 2062 is using the encryption and decryption key 2064.

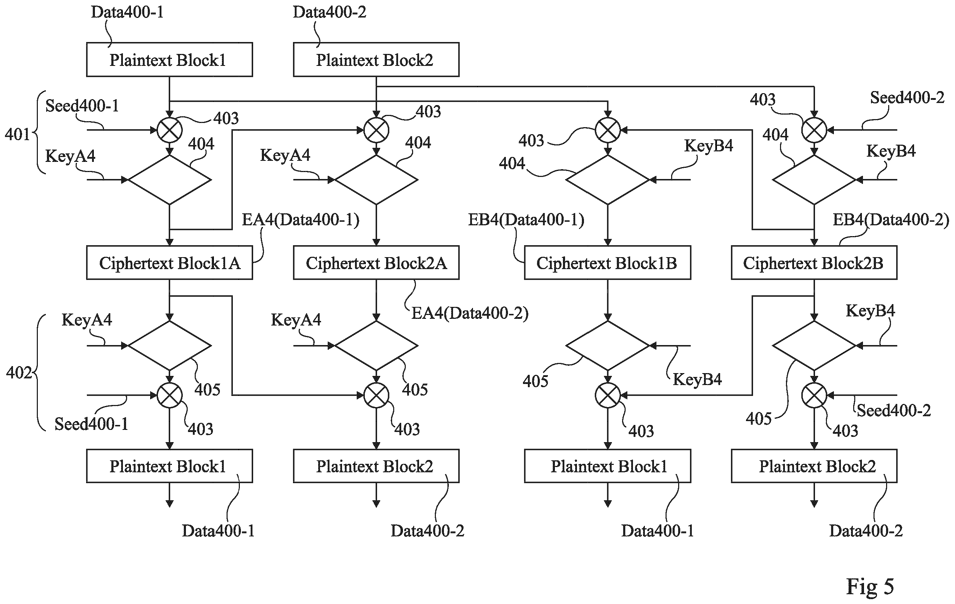

For that purpose, engines 2061 and 2062 can implement different types of symmetrical encryption and decryption algorithms. One example of an encrypting and decrypting algorithm that can be used is the Advanced Encryption Standard, also called AES. This specific example is described in detail in relation with Figure 5.

A method for storing critical data of processor 201 into the external memory 202 is the following. Some critical data of processor 201 is considered here. This critical data is divided in blocks of critical data Data200 of same sizes. Blocks of critical data Data200 are send to the encryption and decryption unit 206, via the private bus 204. Then, unit 206 uses both engines 2061 and 2062 to encrypt each block of critical data Data200. More particularly, engine 2061 encrypt each block of critical data Data200, using the encryption and decryption key 2063, in order to provide a first encrypted block of data EA(Data200). At the same time, engine 2062 encrypt each block of critical data Data200, using the encryption and decryption key 2064, in order to provide a second encrypted block of data EB(Data200).

Both first and second encrypted blocks of data EA(Data200) and EB(Data200) are send to the memory 202 for storing, via the public bus 205. According to a preferred embodiments, the first and second encrypted blocks of data EA(Data200) and EB(Data200) are mixed in the memory 202. A preferred way of mixing first and second encrypted blocks of data EA(Data200) and EB(Data200) in memory 202 is described in details in relation with Figure 3.

Thus, a method for storing blocks of critical data Data200 in the external memory 202 comprises the following steps:
- Encrypting each block of critical data Data200 with a first encryption and decryption key 2063 to obtain a first encrypted block of data EA(Data200) ;
- Encrypting each block of critical data Data200 with a second encryption and decryption key 2064 to obtain a second encrypted block of data EB(Data200) ; and
- Storing each first and second encrypted block of data EA(Data200) and EB(Data200) in the external memory 202, and, for example, mixing said first and second encrypted blocks of data EA(Data200) and EB(Data200).

Once first and second encrypted blocks of data EA(Data200) and EB(Data200) are stored in the memory, a method for retrieving the critical data is the following. Both first and second encrypted blocks of data EA(Data200) and EB(Data200) are retrieved from the external memory 202.

The first and second encrypted blocks of data EA(Data200) and EB(Data200) are send to the encryption and decryption unit 206, via the public bus 205. Each encrypted block of data is decrypted by an engine 2061 or 2062. More particularly, first encrypted block of data EA(Data200) are decrypted using engines 2061 and key 2063, since key 2063 was used to obtain encrypted block of data EA(Data200). Second encrypted block of data EB(Data200) are decrypted using engines 2062 and key 2064, since key 2064 was used to obtain encrypted blocks of data EB(Data200). Both decrypted blocks of data are then compared. If they are identical, the correct blocks of critical data Data200 have been retrieved and can be send to the processor 201, via private bus 204. If they are not identical, the correct blocks of critical data Data200 have not been retrieved, because it has been corrupted. The processor cannot use the decrypted blocks of data.

Thus, a method for retrieving blocks of critical data Data200 that have be stored in the external memory 202 using the previous method comprises the following steps:
- Get first and second encrypted blocks of data EA(Data200) and EB(Data200) from external memory 202;
- Decrypt first encrypted blocks of data EA(Data200) using said first encryption key 2063;
- Decrypt second encrypted blocks of data EB(Data200) using said second encryption key 2064; and
- Compare the results of both decryption steps, if they are identical the blocks of critical data can be used by the processor.

One advantage to these methods is to allow a processor to store critical data into an untrusted memory.

Figure 3 represents, in block form, a mixing step of the encrypted data of the embodiment of Figure 2.

In Figure 3 are represented some critical blocks of data Data300 as they are before storing in an external memory, that is in a processor 301 (CPU).

In Figure 3 are also represented the first and second encrypted blocks of data EA(Data300) and EB(Data300) resulting from the storing method described in relation with Figure 2. Both first and second encrypted blocks of data EA(Data300) and EB(Data300) are stored in an external memory 302 (External RAM).

According to an embodiment, first and second encrypted blocks of data EA(Data300) and EB (Data300) are mixed in memory 302. In other words, the entire two versions of encrypted data are not written in one block in memory 302, but are separated in several blocks of data written is different part of the memory.

According to a preferred embodiment, each first encrypted blocks of data EA(Data300) is stored between two second encrypted blocks of data EB(Data300). Similarly, each second encrypted blocks of data EB(Data300) is stored between two first encrypted blocks of data EA(Data300). In other words, each first encrypted blocks of data EA(Data300) is stored immediately before the corresponding second encrypted blocks of data EB(Data300). Similarly, each second encrypted blocks of data EB(Data300) is stored immediately before the corresponding first encrypted blocks of data EA(Data300).

Thus, if someone wants to corrupt the critical blocks of data Data300 by accessing memory 302, it is most likely that two different parts of the first and second encrypted blocks of data are being corrupted. Then, it is extremely unlikely that the two corrupted blocks of data will decrypt to identical results. There is concept of "diffusion" in encryption algorithms, whereby if just 1 bit of the encrypted data is changed, then that will be relevant to all the bits of the decrypted block (not just nearby bits), and change about half of them, on average.

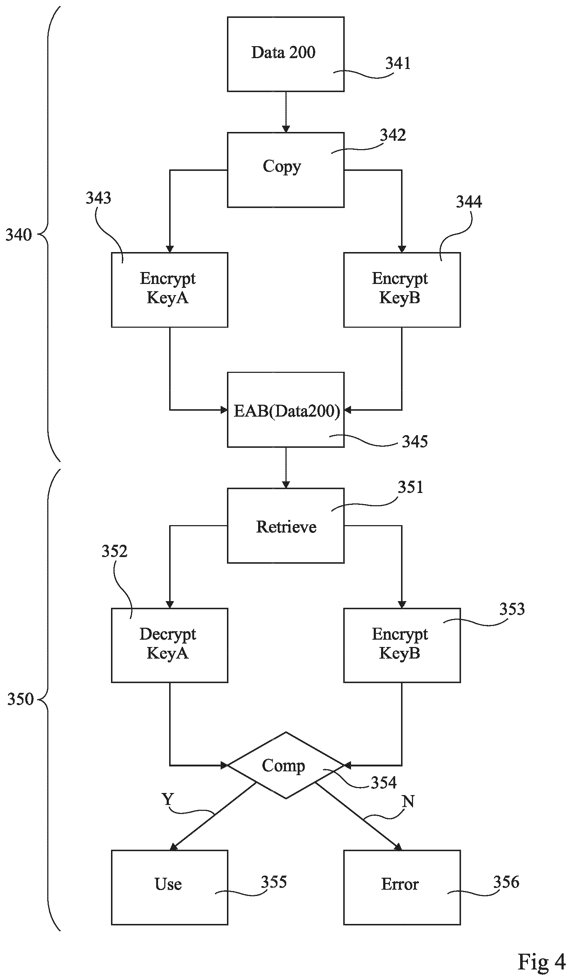

Figure 4 represents, in block form, an example of the execution of the embodiment of the methods described in relation with Figure 2.

More particularly, Figure 4 represents a method 340 for storing critical data in a memory according to the embodiment described in relation with Figure 2, and a method 350 for retrieving such critical data in the memory according to the embodiments described in relation with Figure 2.

Thus, method 340 comprises the following steps.

At an initial step 341 (Data200), processor 201 of Figure 2 wants to store some blocks of critical data Data200 into the external memory 202.

At a step 342 (Copy), following step 341, processor 201 creates a copy of blocks of critical data Data200 and send both copies to the encryption and decryption unit 206 via the private bus 204.

At a step 343 (Encrypt KeyA), following step 342, engine 2061 of encryption and decryption unit 206 encrypts the first copy of blocks of critical data Data200 using first encryption and decryption key 2063. A first encrypted data EA(Data200) is generated.

At a step 344 (Encrypt KeyB), following step 342, engine 2062 of encryption and decryption unit 206 encrypts the second copy of blocks of critical data Data200 using second encryption and decryption key 2064. A second encrypted data EB(Data200) is generated.

At a step 345 (EAB(Data200)), following steps 343 and 344, both first and second encrypted blocks of data EA(Data200) and EB(Data200) are send to the memory 202 for storing, via the public bus 205. According to the preferred embodiments, the first and second encrypted blocks of data EA(Data200) and EB(Data200) are mixed in the memory 202, for example using the way of mixing described in details in relation with Figure 3.

Method 350 comprises the following steps.

At an initial step 351 (Retrieve), data EAB(Data200) is retrieved as first and second encrypted blocks of data EA(Data200) and EB(Data200) from the memory 202.

At a step 352 (Decrypt KeyA), following step 351, each first encrypted block of data EA(Data200) is then decrypted by using the encryption and decryption key 2063 to obtain a first copy of a block of data Data200.

At a step 353 (Decrypt KeyB), following step 351, each second encrypted block of data EB(Data200) is then decrypted by using the encryption and decryption key 2064 to obtain a second copy of a block of data Data200.

At a step 354 (Comp), following steps 352 and 352, both copies of each block of critical data Data200 are compared. If the comparison is a success (output Y of bloc 354), next step is step 355 (Use). Otherwise (output N of bloc 354), next step is step 356 (Error).

At step 355 (Use), each copies of blocks of critical data Data200 are identical, it means that data EAB(Data200) has not been corrupted during its storage in memory 202. Processor 201 can use safely critical data Data200.

At step 356 (Error), At least one copy of a block of critical data Data200 are not identical, it means that data EAB(Data200) has been corrupted during its storage in memory 202. According to an example, an error message may be sent to processor 201. According to another example, both copies of blocks of critical data Data200 can be sent to processor for analysis.

Figure 5 represents, in block form, the execution of a variant of the embodiment of the methods described in relation with Figure 2.

More particularly, Figure 5 represents the execution of a method 401 for storing critical data in an external memory, and a method 402 for retrieving said data. According to an embodiment, both methods 401 and 402 are using the AES algorithm to encrypt and decrypt data. More particularly, both methods 401 and 402 are using the chaining of several AES operations, usually called AES-CBC for AES-Cipher-Block-Chaining.

The method 401 for storing critical data in an external memory is the following. The critical data are sent by a processor of the type of processor 201 of Figure 2 to an encryption and decryption unit of the encryption and decryption unit 206 of Figure 2. The unit creates two copies of blocks of the critical data, referenced hereafter as Data400-1 (Plaintext Block1) and Data400-2 (Plaintext Block2).

The first copy Data400-1 is combined with a first word of data Seed400-1 using an EXCLUSIVE OR logical operation 403, also called XOR operation, and then an encryption operation 404 is used, with an encryption key KeyA4, to obtain a first encrypted copy Data EA4(Data400-1) (Ciphertext Black 1A). According to an example, the encryption operation 404 is an implementation of an AES encryption operation. Then, the second copy Data400-2 is combine with the first encrypted copy Data EA4(Data400-1), using XOR operation 403, and then the encryption operation 404 is used, with the encryption key KeyA4, to obtain a second encrypted copy Data EA4(Data400-2) (Ciphertext Black 2A). Thus, two different encrypted data are obtained.

Parallelly, the second copy Data400-2 is also combine with a second word of data Seed400-2, using XOR operation 403, and then the encryption operation 404 is used, with another encryption key KeyB4, to obtain a second encrypted copy Data EB4(Data400-2) (Ciphertext Black 1B). Then, the first copy Data400-1 is also combine with the second encrypted copy Data EB4(Data400-2) using XOR operation 403, and the encryption operation 404 is used, with the encryption key KeyB4, to obtain a first encrypted copy Data EB4(Data400-1) (Ciphertext Black 2B). Thus, two different encrypted blocks of data are obtained once again.

All encrypted blocks of data EA4(Data400-1), EA4(Data400-2), EB4(Data400-1), and EB4(Data400-2) can be stored in the memory. According to a preferred variant, all encrypted data EA4(Data400-1), EA4(Data400-2), EB4 (Data400-1), and EB4(Data400-2) can be mixed and stored in the memory, as described in relation with Figure **3****.**

The method 402 for retrieving the critical blocks of data is the following. All encrypted blocks of data EA4(Data400-1), EA4(Data400-2), EB4(Data400-1), and EB4(Data400-2) are retrieved from memory.

Each encrypted block of data EA4(Data400-1) is decrypted by using a decryption operation 405, and the key KeyA4, and then separated from the word of data Seed400-1 by using the XOR operation 403. According to an example, the encryption operation 404 is an implementation of an AES decryption operation. Each encrypted block of data EA4(Data400-2) is decrypted by using the decryption operation 405, and then separated from the encrypted block of data EA4(Data400-1) by using the XOR operation 403. The copy Data400-1 should then be retrieved as a results of both operations.

Similarly, each encrypted block of data EB4(Data400-2) is decrypted by using a decryption operation 405, and the key KeyB4, and then separated from the word of data Seed400-2 by using the XOR operation 403. Each encrypted block of data EB4(Data400-1) is decrypted by using the decryption operation 405, and then separated from the encrypted block of data EB4(Data400-2) by using the XOR operation 403. The copy Data400-2 should then be retrieved as a results of both operations.

Comparison steps of each bloc of data are then performed to determinate is the decrypted blocks of data are all identical. The advantage of the use of AES-CBC algorithm is to ensure that an attacker cannot just look for two encrypted blocks that happen to decrypt to identical values via the two keys. They have to look for two pairs of encrypted blocks that happen to decrypt to two identical pairs of values. This doubles the resistance against brute force attacks.

According to a preferred embodiment, method 401 uses a encryption key of 256 bits and uses it to encrypt data blocks of 128 bits. It has to be noted that random corruptions in both of the two 128-bit ciphered blocks in the memory have a 1 in 2¹²⁸ chance of resulting in identical decrypted plaintexts. This means that, the security strength against collision resistance is 128-bit. In order to achieve 256-bit collision resistance, we must use Cipher-Block-Chaining (CBC) method to link two 128-bit blocks together, and this is why the XOR operation 403 are performed with data EA4(Data400-1) and Data400-2, and with data EA4 (Data400-2) and Data400-1. According to an example, if the XOR operation 403 is performed with data EA4(Data400-2) and Data400-1, and with data EB4 (Data400-1) and Data400-2, in case of an attack, data Data400-2 may be corrupted by the chaining and so the method will only have a 128-bit collision resistance.

Various embodiments and variants have been described. Those skilled in the art will understand that certain features of these embodiments can be combined and other variants will readily occur to those skilled in the art.

Finally, the practical implementation of the embodiments and variants described herein is within the capabilities of those skilled in the art based on the functional description provided hereinabove.

## Claims

1. A method for storing (401) blocks of critical data (Data200; Data300; Data400-1, Data400-2) of an electronical device (100; 200) in a memory (103; 202; 302) that is external to said electronical device (100; 200), comprising the following steps:
- Obtaining first encrypted blocks of data (EA(Data200); EA(Data300); EA4(Data400-1), EA4(Data400-2)) by encrypting blocks of critical data (Data200; Data300; Data400-1, Data400-2) using a first encryption key (2063; KeyA4);
- Obtaining second encrypted blocks of data (EB(Data200); EB(Data300); EB4(Data400-1), EB4(Data400-2)) by encrypting blocks of critical data (Data200; Data300; Data400-1, Data400-2) using a second encryption key (2064; KeyB4) different from the first encryption key (2063; KeyA4); and
- Storing first and second encrypted blocks of data (EA(Data200), EB(Data200); EA(Data300), EB(Data300); EA4(Data400-1), EB4(Data400-2), EA4(Data400-1), EB4(Data400-2)) in said memory (103; 202; 302),
wherein the first and second encrypted blocks of data are obtained by applying AES to said critical data (Data200; Data300; Data400-1, Data400-2),
wherein a first copy of first encrypted blocks of data (EA4(Data400-1)) is obtained by using the following steps:
(a) Combining first blocks of critical data (Data400-1) with a first word of data (Seed400-1); and
(b) Encrypting the result of step (a) with said first encryption key (KeyA4), and
a first copy of second encrypted blocks of data (EA4(Data400-2)) is obtained by using the following steps:
(a') Combining second blocks of critical data (Data400-2) with said first copy of first encrypted blocks of data (EA4(Data400-1)); and
(b') Encrypting the result of step (a') with said first encryption key (KeyA4), and
wherein a second copy of second encrypted blocks of data (EB4(Data400-2)) is obtained by using the following steps:
(c) Combining second blocks of critical data (Data400-2) with second word of data (Seed400-2); and
(d) Encrypting the result of step (c) with said second encryption key (KeyB4), and
a second copy of first encrypted blocks of data (EB4(Data400-1)) is obtained by using the following steps:
(c') Combining first blocks of critical data (Data400-2) with said second copy of the second encrypted blocks of data (EB4(Data400-2)) ; and
(d') Encrypting the result of step (c') with said second encryption key (KeyB4).

2. An electronical device (100; 200) adapted to store blocks of critical data (Data200; Data300; Data400-1, Data400-2) in a memory (103; 202; 302) that is external to said electronical device (100; 200) by executing the following steps:
- Obtaining first encrypted blocks of data (EA(Data200); EA(Data300); EA4(Data400-1), EA4(Data400-2)) by encrypting blocks of critical data (Data200; Data300; Data400-1, Data400-2) using a first encryption key (2063; KeyA4);
- Obtaining second encrypted blocks of data (EB(Data200); EB(Data300); EB4(Data400-1), EB4(Data400-2)) by encrypting blocks of critical data (Data200; Data300; Data400-1, Data400-2) using a second encryption key (2064; KeyB4) different from the first encryption key (2063; KeyA4); and
- Storing first and second encrypted blocks of data (EA(Data200), EB(Data200); EA(Data300), EB(Data300); EA4(Data400-1), EB4(Data400-2), EA4(Data400-1), EB4(Data400-2)) in said memory (103; 202; 302),
wherein the first and second encrypted blocks of data are obtained by applying AES to said critical data (Data200; Data300; Data400-1, Data400-2),
wherein a first copy of first encrypted blocks of data (EA4(Data400-1)) is obtained by using the following steps:
(a) Combining first blocks of critical data (Data400-1) with a first word of data (Seed400-1); and
(b) Encrypting the result of step (a) with said first encryption key (KeyA4), and
a first copy of second encrypted blocks of data (EA4(Data400-2)) is obtained by using the following steps:
(a') Combining second blocks of critical data (Data400-2) with said first copy of first encrypted blocks of data (EA4(Data400-1)); and
(b') Encrypting the result of step (a') with said first encryption key (KeyA4), and
wherein a second copy of second encrypted blocks of data (EB4(Data400-2)) is obtained by using the following steps:
(c) Combining second blocks of critical data (Data400-2) with second word of data (Seed400-2); and
(d) Encrypting the result of step (c) with said second encryption key (KeyB4), and
a second copy of first encrypted blocks of data (EB4(Data400-1)) is obtained by using the following steps:
(c') Combining first blocks of critical data (Data400-2) with said second copy of the second encrypted blocks of data (EB4(Data400-2)) ; and
(d') Encrypting the result of step (c') with said second encryption key (KeyB4).

3. Method according to claim 1, or device according to claim 2, wherein said first and second encrypted blocks of data (EA(Data200, EB(Data200); EA(Data300), EB(Data300); EA4(Data400-1), EA4(Data400-2), EB4(Data400-1), EB4(Data400-2)) are mixed into said memory (103; 202; 302).

4. Method according to claims 1 or 3, or device according to claims 2 or 3, wherein, in said memory (103; 202; 302), each data composing said each first encrypted block of data (EA(Data200); EA(Data300); EA4(Data400-1), EA4(Data400-2)) is stored immediately before the corresponding second encrypted block of data (EA(Data200); EA(Data300); EA4(Data400-1), EA4(Data400-2)).

5. Method according to any of claims 1, 3 and 4,or device according to any of claims 2 to 4, wherein said memory (103; 202; 302) is a DRAM memory (103; 202; 302).

6. Method according to any of claims 1, 3 to 5, or device according to any of claims 2 to 5, wherein said electronical device (100; 200) comprises a processor capable of processing critical blocks of data (Data200; Data300; Data400-1, Data400-2).

7. A method for retrieving critical blocks of data stored in a memory (103; 202; 302) by using the method according to any of claims 1, 3 to 6.

8. A device being able to retrieve critical blocks of data stored in a memory (103; 202; 302) by using the method according to any of claims 1, 3 to 6.

9. Method according to claim 7, or device according to claim 11, comprising the following steps:
- Get first and second encrypted blocks of data (EA(Data200), EB(Data200); EA(Data300), EB(Data300); EA4(Data400-1), EB4(Data400-2), EA4(Data400-1), EB4(Data400-2)) from said memory (103; 202; 302);
- Decrypt first encrypted blocks of data (EA(Data200); EA(Data300); EA4(Data400-1), EA4(Data400-2)) using said first encryption key (2063; KeyA4);
- Decrypt second encrypted blocks of data (EB(Data200); EB(Data300); EB4(Data400-1), EB4(Data400-2)) using said second encryption key (2064; KeyB4); and
- Compare the results of both decryption steps, if they are identical the blocks of critical data (Data200; Data300; Data400-1, Data400-2) can be used.

10. Method according to claim 7 or 9, or device according to claim 11 or 12, wherein, if the result of both decryption steps are not identical, the blocks of critical data (Data200; Data300; Data400-1, Data400-2) cannot be used.

11. Method according to any of claims 7, 9 or 10, or device according to any of claims 11 to 13, wherein the step of getting first and second encrypted blocks of data (EA(Data200), EB(Data200); EA(Data300), EB(Data300); EA4(Data400-1), EB4(Data400-2), EA4(Data400-1), EB4(Data400-2)) from said memory (103; 202; 302) comprises a step of separating first and second encrypted data.

## Patentansprüche

1. Ein Verfahren zum Speichern (401) von kritischen Datenblöcken (Data200; Data300; Data400-1, Data400-2) eines elektronischen Geräts (100; 200) in einem Speicher (103; 202; 302), der extern zu dem besagten elektronischen Gerät (100; 200) ist, das Folgendes aufweist:
- Erhalten erster verschlüsselter Datenblöcke (EA(Data200); EA(Data300); EA4(Data400-1), EA4(Data400-2)) durch Verschlüsseln von kritischen Datenblöcken (Data200; Data300; Data400-1, Data400-2) unter Verwendung eines ersten Verschlüsselungs-Schlüssels (2063; KeyA4);
- Erhalten zweiter verschlüsselter Datenblöcke (EB(Data200); EB(Data300); EB4(Data400-1), EB4(Data400-2)) durch Verschlüsseln von kritischen Datenblöcken (Data200; Data300; Data400-1, Data400-2) unter Verwendung eines zweiten Verschlüsselungs-Schlüssels (2064; KeyB4), der sich von dem ersten Verschlüsselungs-Schlüssel (2063; KeyA4) unterscheidet; und
- Speichern erster und zweiter verschlüsselter Datenblöcke (EA(Data200), EB(Data200); EA(Data300), EB(Data300); EA4(Data400-1), EB4(Data400-2), EA4(Data400-1), EB4(Data400-2)) in dem besagten Speicher (103; 202; 302),
wobei die ersten und zweiten verschlüsselten Datenblöcke durch Anwenden von AES auf die besagten kritischen Daten (Data200; Data300; Data400-1, Data400-2) erhalten werden,
wobei eine erste Kopie erster verschlüsselter Datenblöcke (EA4(Data400-1)) unter Verwendung der folgenden Schritte erhalten wird:
(a) Kombinieren erster kritischer Datenblöcke (Data400-1) mit einem ersten Datenwort (Seed400-1); und
(b) Verschlüsseln des Ergebnisses von Schritt (a) mit dem besagten ersten Verschlüsselungs-Schlüssel (KeyA4), und
eine erste Kopie zweiter verschlüsselter Datenblöcke (EA4(Data400-2)) unter Verwendung der folgenden Schritte erhalten wird:
(a') Kombinieren zweiter kritischer Datenblöcke (Data400-2) mit der besagten ersten Kopie erster verschlüsselter Datenblöcke (EA4(Data400-1)); und
(b') Verschlüsseln des Ergebnisses von Schritt (a') mit dem besagten ersten Verschlüsselungs-Schlüssel (KeyA4), und
wobei eine zweite Kopie zweiter verschlüsselter Datenblöcke (EB4(Data400-2)) unter Verwendung der folgenden Schritte erhalten wird:
(c) Kombinieren zweiter kritischer Datenblöcke (Data400-2) mit einem zweiten Datenwort (Seed400-2); und
(d) Verschlüsseln des Ergebnisses von Schritt (c) mit dem besagten zweiten Verschlüsselungs-Schlüssel (KeyB4), und
eine zweite Kopie erster verschlüsselter Datenblöcke (EB4(Data400-1)) unter Verwendung der folgenden Schritte erhalten wird:
(c') Kombinieren erster kritischer Datenblöcke (Data400-2) mit der besagten zweiten Kopie der zweiten verschlüsselten Datenblöcke (EB4(Data400-2)); und
(d') Verschlüsseln des Ergebnisses von Schritt (c') mit dem besagten zweiten Verschlüsselungs-Schlüssel (KeyB4).

2. Eine elektronische Einrichtung (100; 200), die eingerichtet ist zum Speichern von kritischen Datenblöcken (Data200; Data300; Data400-1, Data400-2) in einem Speicher (103; 202; 302), der extern zu der besagten elektronischen Einrichtung (100; 200) ist, durch Ausführen der folgenden Schritte:
- Erhalten erster verschlüsselter Datenblöcke (EA(Data200); EA(Data300); EA4(Data400-1), EA4(Data400-2)) durch Verschlüsseln von kritischen Datenblöcken (Data200; Data300; Data400-1, Data400-2) unter Verwendung eines ersten Verschlüsselungs-Schlüssels (2063; KeyA4);
- Erhalten zweiter verschlüsselter Datenblöcke (EB(Data200); EB(Data300); EB4(Data400-1), EB4(Data400-2)) durch Verschlüsseln von kritischen Datenblöcken (Data200; Data300; Data400-1, Data400-2) unter Verwendung eines zweiten Verschlüsselungs-Schlüssels (2064; KeyB4), der sich von dem ersten Verschlüsselungs-Schlüssel (2063; KeyA4) unterscheidet; und
- Speichern erster und zweiter verschlüsselter Datenblöcke (EA(Data200), EB(Data200); EA(Data300), EB(Data300); EA4(Data400-1), EB4(Data400-2), EA4(Data400-1), EB4(Data400-2)) in dem besagten Speicher (103; 202; 302),
wobei die ersten und zweiten verschlüsselten Datenblöcke durch Anwenden von AES auf die besagten kritischen Daten (Data200; Data300; Data400-1, Data400-2) erhalten werden,
wobei eine erste Kopie erster verschlüsselter Datenblöcke (EA4(Data400-1)) unter Verwendung der folgenden Schritte erhalten wird:
(a) Kombinieren erster kritischer Datenblöcke (Data400-1) mit einem ersten Datenwort (Seed400-1); und
(b) Verschlüsseln des Ergebnisses von Schritt (a) mit dem besagten ersten Verschlüsselungs-Schlüssel (KeyA4), und
eine erste Kopie zweiter verschlüsselter Datenblöcke (EA4(Data400-2)) unter Verwendung der folgenden Schritte erhalten wird:
(a') Kombinieren zweiter kritischer Datenblöcke (Data400-2) mit der besagten ersten Kopie erster verschlüsselter Datenblöcke (EA4(Data400-1)); und
(b') Verschlüsseln des Ergebnisses von Schritt (a') mit dem besagten ersten Verschlüsselungs-Schlüssel (KeyA4), und
wobei eine zweite Kopie zweiter verschlüsselter Datenblöcke (EB4(Data400-2)) unter Verwendung der folgenden Schritte erhalten wird:
(c) Kombinieren zweiter kritischer Datenblöcke (Data400-2) mit einem zweiten Datenwort (Seed400-2); und
(d) Verschlüsseln des Ergebnisses von Schritt (c) mit dem besagten zweiten Verschlüsselungs-Schlüssel (KeyB4), und
eine zweite Kopie erster verschlüsselter Datenblöcke (EB4(Data400-1)) unter Verwendung der folgenden Schritte erhalten wird:
(c') Kombinieren erster kritischer Datenblöcke (Data400-2) mit der besagten zweiten Kopie der zweiten verschlüsselten Datenblöcke (EB4(Data400-2)); und
(d') Verschlüsseln des Ergebnisses von Schritt (c') mit dem besagten zweiten Verschlüsselungs-Schlüssel (KeyB4).

3. Das Verfahren nach Anspruch 1 oder die Einrichtung nach Anspruch 2, wobei die besagten ersten und zweiten verschlüsselten Datenblöcke (EA(Data200), EB(Data200); EA(Data300), EB(Data300); EA4(Data400-1), EA4(Data400-2), EB4(Data400-1), EB4(Data400-2)) in dem besagten Speicher (103; 202; 302) vermischt sind.

4. Das Verfahren nach Anspruch 1 oder 3 oder die Einrichtung nach Anspruch 2 oder 3, wobei in dem besagten Speicher (103; 202; 302) jedes Datum, das den jeweiligen ersten verschlüsselten Datenblock (EA(Data200); EA(Data300); EA4(Data400-1), EA4(Data400-2)) zusammensetzt, unmittelbar vor dem entsprechenden zweiten verschlüsselten Datenblock (EA(Data200); EA(Data300); EA4(Data400-1), EA4(Data400-2)) gespeichert ist.

5. Das Verfahren nach einem der Ansprüche 1, 3 und 4 oder die Einrichtung nach einem der Ansprüche 2 bis 4, wobei der besagte Speicher (103; 202; 302) ein DRAM-Speicher (103; 202; 302) ist.

6. Das Verfahren nach einem der Ansprüche 1, 3 bis 5 oder die Einrichtung nach einem der Ansprüche 2 bis 5, wobei das besagte elektronische Gerät (100; 200) einen Prozessor aufweist, der in der Lage ist, kritische Datenblöcke (Data200; Data300; Data400-1, Data400-2) zu verarbeiten.

7. Ein Verfahren zum Abrufen kritischer Datenblöcke, die in einem Speicher (103; 202; 302) gespeichert sind, unter Verwendung des Verfahrens nach einem der Ansprüche 1, 3 bis 6.

8. Eine Einrichtung, die in der Lage ist, kritische Datenblöcke, die in einem Speicher (103; 202; 302) gespeichert sind, unter Verwendung des Verfahrens nach einem der Ansprüche 1, 3 bis 6 abzurufen.

9. Das Verfahren nach Anspruch 7 oder die Einrichtung nach Anspruch 11, das Folgendes aufweist:
- Erhalten erster und zweiter verschlüsselter Datenblöcke (EA(Data200), EB(Data200); EA(Data300), EB(Data300); EA4(Data400-1), EB4(Data400-2), EA4(Data400-1), EB4(Data400-2)) aus dem besagten Speicher (103; 202; 302);
- Entschlüsseln erster verschlüsselter Datenblöcke (EA(Data200); EA(Data300); EA4(Data400-1), EA4(Data400-2)) unter Verwendung des besagten ersten Verschlüsselungs-Schlüssels (2063; KeyA4);
- Entschlüsseln zweiter verschlüsselter Datenblöcke (EB(Data200); EB(Data300); EB4(Data400-1), EB4(Data400-2)) unter Verwendung des besagten zweiten Verschlüsselungs-Schlüssels (2064; KeyB4); und
- Vergleichen der Ergebnisse beider Entschlüsselungsschritte; wenn diese identisch sind, können die kritischen Datenblöcke (Data200; Data300; Data400-1, Data400-2) verwendet werden.

10. Das Verfahren nach Anspruch 7 oder 9 oder die Einrichtung nach Anspruch 11 oder 12, wobei, wenn das Ergebnis beider Entschlüsselungsschritte nicht identisch ist, die kritischen Datenblöcke (Data200; Data300; Data400-1, Data400-2) nicht verwendet werden können.

11. Das Verfahren nach einem der Ansprüche 7, 9 oder 10 oder die Einrichtung nach einem der Ansprüche 11 bis 13, wobei der Schritt des Erhaltens erster und zweiter verschlüsselter Datenblöcke (EA(Data200), EB(Data200); EA(Data300), EB(Data300); EA4(Data400-1), EB4(Data400-2), EA4(Data400-1), EB4(Data400-2)) aus dem besagten Speicher (103; 202; 302) einen Schritt des Trennens erster und zweiter verschlüsselter Daten aufweist.

## Revendications

1. Procédé de stockage (401) de blocs de données critiques (Data200 ; Data300 ; Data400-1, Data400-2) d'un dispositif électronique (100 ; 200) dans une mémoire (103 ; 202 ; 302) externe audit dispositif électronique (100 ; 200), comprenant les étapes suivantes :
- l'obtention de premiers blocs de données cryptés (EA(Data200) ; EA(Data300) ; EA4(Data400-1), EA4(Data400-2)) en cryptant les blocs de données critiques (Data200 ; Data300 ; Data400-1, Data400-2) en utilisant une première clef de chiffrement (2063 ; KeyA4) ;
- l'obtention de deuxièmes blocs de données cryptés (EB(Data200) ; EB(Data300) ; EB4(Data400-1), EB4(Data400-2)) en cryptant les blocs de données critiques (Data200 ; Data300 ; Data400-1, Data400-2) en utilisant une deuxième clef de chiffrement (2064 ; KeyB4) différente de la première clef de chiffrement (2063 ; KeyA4) ; et
- le stockage des premier et deuxième blocs de données cryptés (EA(Data200), EB(Data200) ; EA(Data300), EB(Data300) ; EA4(Data400-1), EB4(Data400-2), EA4(Data400-1), EB4(Data400-2)) dans ladite mémoire (103 ; 202 ; 302),
dans lequel les premier et deuxième blocs de données cryptés sont obtenus en appliquant un AES auxdites données critiques (Data200 ; Data300 ; Data400-1, Data400-2)
dans lequel une première copie des premiers blocs de données cryptés (EA4(Data400-1)) est obtenue en utilisant les étapes suivantes :
(a) la combinaison des premiers blocs de données critiques (Data400-1) avec un premier mot de données (Seed400-1) ; et
(b) le cryptage du résultat de l'étape (a) avec ladite première clef de chiffrement (KeyA4), et
une première copie des deuxièmes blocs de données cryptés (EA4 (Data400-2)) est obtenue en utilisant les étapes suivantes :
(a') la combinaison des deuxièmes blocs de données critiques (Data400-2) avec ladite première copie des premiers blocs de données cryptés (EA4(Data400-1)) ; et
(b') le cryptage du résultat de l'étape (a') avec ladite première clef de chiffrement (KeyA4), et
dans lequel une deuxième copie des deuxièmes blocs de données cryptés (EB4(Data400-2)) est obtenue en utilisant les étapes suivantes :
(c)la combinaison des deuxièmes blocs de données critiques (Data400-2) avec le deuxième mot de données (Seed400-2) ; et
(d) le cryptage du résultat de l'étape (c) avec ladite deuxième clef de chiffrement (KeyB4), et
une deuxième copie des premiers blocs de données cryptés (EB4(Data400-1)) est obtenue en utilisant les étapes suivantes :
(c') la combinaison des premiers blocs de données critiques (Data400-2) avec ladite deuxième copie des deuxièmes blocs de données cryptés (EB4(Data400-2)) ; et
(d') le cryptage du résultat de l'étape (c') avec ladite deuxième clef de chiffrement (KeyB4).

2. Dispositif électronique (100 ; 200) adapté pour stocker des blocs de données critiques (Data200 ; Data300 ; Data400-1, Data400-2) dans une mémoire (103 ; 202 ; 302) externe audit dispositif électronique (100 ; 200) en exécutant les étapes suivantes :
- l'obtention de premiers blocs de données cryptés (EA(Data200) ; EA(Data300) ; EA4(Data400-1), EA4(Data400-2)) en cryptant les blocs de données critiques (Data200 ; Data300 ; Data400-1, Data400-2) en utilisant une première clef de chiffrement (2063 ; KeyA4) ;
- l'obtention de deuxièmes blocs de données cryptés (EB(Data200) ; EB(Data300) ; EB4(Data400-1), EB4(Data400-2)) en cryptant les blocs de données critiques (Data200 ; Data300 ; Data400-1, Data400-2) en utilisant une deuxième clef de chiffrement (2064 ; KeyB4) différente de la première clef de chiffrement (2063 ; KeyA4) ; et
- le stockage des premier et deuxième blocs de données cryptés (EA(Data200), EB(Data200) ; EA(Data300), EB(Data300) ; EA4(Data400-1), EB4(Data400-2), EA4(Data400-1), EB4(Data400-2)) dans ladite mémoire (103 ; 202 ; 302),
dans lequel les premier et deuxième blocs de données cryptés sont obtenus en appliquant un AES auxdites données critiques (Data200 ; Data300 ; Data400-1, Data400-2)
dans lequel une première copie des premiers blocs de données cryptés (EA4(Data400-1)) est obtenue en utilisant les étapes suivantes :
(a) la combinaison des premiers blocs de données critiques (Data400-1) avec un premier mot de données (Seed400-1) ; et
(b) le cryptage du résultat de l'étape (a) avec ladite première clef de chiffrement (KeyA4), et
une première copie des deuxièmes blocs de données cryptés (EA4(Data400-2)) est obtenue en utilisant les étapes suivantes :
(a') la combinaison des deuxièmes blocs de données critiques (Data400-2) avec ladite première copie des premiers blocs de données cryptés (EA4(Data400-1)) ; et
(b') le cryptage du résultat de l'étape (a') avec ladite première clef de chiffrement (KeyA4), et
dans lequel une deuxième copie des deuxièmes blocs de données cryptés (EB4(Data400-2)) est obtenue en utilisant les étapes suivantes :
(c) la combinaison des deuxièmes blocs de données critiques (Data400-2) avec le deuxième mot de données (Seed400-2) ; et
(d) le cryptage du résultat de l'étape (c) avec ladite deuxième clef de chiffrement (KeyB4), et
une deuxième copie des premiers blocs de données cryptés (EB4(Data400-1)) est obtenue en utilisant les étapes suivantes :
(c') la combinaison des premiers blocs de données critiques (Data400-2) avec ladite deuxième copie des deuxièmes blocs de données cryptés (EB4(Data400-2)) ; et
(d') le cryptage du résultat de l'étape (c') avec ladite deuxième clef de chiffrement (KeyB4).

3. Procédé selon la revendication 1, ou dispositif selon la revendication 2, dans lequel lesdits premier et deuxième blocs de données cryptés (EA(Data200, EB(Data200) ; EA(Data300), EB(Data300) ; EA4(Data400-1), EA4(Data400-2), EB4(Data400-1), EB4(Data400-2)) sont mélangés dans ladite mémoire (103 ; 202 ; 302).

4. Procédé selon les revendications 1 ou 3, ou dispositif selon les revendications 2 ou 3, dans lequel, dans ladite mémoire (103 ; 202 ; 302), chaque donnée composant ledit premier bloc crypté de données (EA(Data200) ; EA(Data300) ; EA4(Data400-1), EA4(Data400-2)) est stockée immédiatement avant le deuxième bloc crypté de données correspondant (EA(Data200) ; EA(Data300) ; EA4(Data400-1), EA4(Data400-2)).

5. Procédé selon l'une quelconque des revendications 1, 3 ou 4, ou dispositif selon l'une quelconque des revendications 2 à 4, dans lequel ladite mémoire (103 ; 202 ; 302) est une mémoire DRAM (103 ; 202 ; 302).

6. Procédé selon l'une quelconque des revendications 1, 3 à 5, ou dispositif selon l'une quelconque des revendications 2 à 5, dans lequel ledit dispositif électronique (100 ; 200) comprend un processeur capable de traiter des blocs de données critiques (Data200 ; Data300 ; Data400-1, Data400-2).

7. Procédé de récupération de blocs de données critiques stockés dans une mémoire (103 ; 202 ; 302) en utilisant le procédé selon l'une quelconque des revendications 1, 3 à 6.

8. Dispositif capable de récupérer des blocs de données critiques stockés dans une mémoire (103 ; 202 ; 302) en utilisant le procédé selon l'une quelconque des revendications 1, 3 à 6.

9. Procédé selon la revendication 7, ou dispositif selon la revendication 11, comprenant les étapes suivantes :
- l'obtention de premier et deuxième blocs de données cryptés (EA(Data200), EB(Data200) ; EA(Data300), EB(Data300) ; EA4(Data400-1), EB4(Data400-2), EA4(Data400-1), EB4(Data400-2)) à partir de ladite mémoire (103 ; 202 ; 302) ;
- le décryptage des premiers blocs de données cryptés (EA(Data200) ; EA(Data300) ; EA4(Data400-1), EA4(Data400-2)) en utilisant ladite première clef de chiffrement (2063 ; KeyA4) ;
- le décryptage des deuxièmes blocs de données cryptés (EB(Data200) ; EB(Data300) ; EB4(Data400-1), EB4(Data400-2)) en utilisant ladite deuxième clef de chiffrement (2064 ; KeyB4) ; et
- la comparaison des résultats des deux étapes de décryptage, s'ils sont identiques, les blocs de données critiques (Data200 ; Data300 ; Data400-1, Data400-2) peuvent être utilisés.

10. Procédé selon la revendication 7 ou 9, ou dispositif selon la revendication 11 ou 12, dans lequel, si les résultats des deux étapes de décryptage ne sont pas identiques, les blocs de données critiques (Data200 ; Data300 ; Data400-1, Data400-2) ne peuvent pas être utilisés.

11. Procédé selon l'une quelconque des revendications 7, 9 ou 10, ou dispositif selon l'une quelconque des revendications 11 à 13, dans lequel l'étape d'obtention des premier et deuxième blocs de données cryptés (EA(Data200), EB(Data200) ; EA(Data300), EB(Data300) ; EA4(Data400-1), EB4(Data400-2), EA4(Data400-1), EB4(Data400-2)) à partir de ladite mémoire (103 ; 202 ; 302) comprend une étape de séparation des première et deuxième données cryptées.
